# EUROPÄISCHE PATENTANMELDUNG

(11) **EP 3 712 666 A1**
(43) Veröffentlichungstag der Anmeldung: **23.09.2020**
(21) Anmeldenummer: 20159465.2
(22) Anmeldetag: 26.02.2020
(51) Int. Cl.: G02B 6/44

(54) **VORRICHTUNG ZUR AUFNAHME UND LAGESICHEREN HALTERUNG VON ADERN EINES LICHTWELLENLEITERS**

(30) Priorität: 19.03.2019 DE 102019106951
(71) Anmelder: Wilhelm Rutenbeck GmbH & Co. KG, 58579 Schalksmühle (DE)
(72) Erfinder: Schubert, Matthias, 58509 Lüdenscheid (DE)
(74) Vertreter: Köchling, Conrad-Joachim

(57) **Zusammenfassung**

Die Erfindung beschreibt eine Vorrichtung (1) zur Aufnahme und lagesicheren Halterung von einer oder mehreren ununterbrochenen oder freien oder mittels Verspleißen verbundenen Adern (2) eines Lichtwellenleiters, wobei die Vorrichtung einen Halter (3) zur Aufnahme und Halterung einer oder mehrerer Adern (2) und/oder eines oder mehrerer Spleiße, der in eine topfartige Spleißkassette (4) einsetzbar oder eingesetzt ist, umfasst.

## Beschreibung

In jüngster Zeit findet die Verwendung von Lichtwellenleitern zur Datenübertragung eine immer weiter wachsende Bedeutung. So werden heute Lichtwellenleiter zur Datenübertragung sowohl in gewerblich genutzten Gebäuden wie auch immer mehr in privat genutzten Gebäuden verlegt, um eine besonders schnelle Datenleitung zum Endverbraucher zu schaffen.

Dabei werden die Adern eines derartigen Lichtwellenleiters häufig bis zu einer Aderenddose, in der beispielsweise eine Lichtwellenleiterbuchse angeordnet ist, verlegt. Im Gegensatz zu anderen, beispielsweise elektrischen Leitungen werden in der Praxis die Adern üblicherweise mit einer Überlänge von mindestens zwei, häufig auch drei oder mehr Metern aus den entsprechenden Gebäudewänden herausragend verlegt, um diese anschließend mittels Verspleißen mit sogenannten Pigtails, die ein kürzeres Stück Ader mit einem angeordneten Steckkontakt aufweisen, zu verbinden.

Diese Adern des Lichtwellenleiters dürfen dabei nur in einem bestimmten Biegeradius angeordnet, beispielsweise aufgewickelt, werden, und müssen anschließend im Bereich der Einbaudose, die den Steckkontakt aufnimmt und bildet, untergebracht werden. Dabei ist unbedingt ein Knicken oder sonstiges Beschädigen der Adern, beispielsweise durch Einklemmen einer Ader, zu vermeiden, da ansonsten die Datenleitung unterbrochen ist oder zumindest Schaden nehmen kann.

Im Stand der Technik sind zur Anordnung der Überlängen der Adern Aufputzdosen bekannt, die diese aufnehmen und im Inneren einen Bereich aufweisen, auf den der freie Aderendbereich oder ein verspleißter Bereich aufgewickelt werden kann, um dort vor Beschädigungen geschützt zu verbleiben.

Derartige Aufputzdosen werden üblicherweise neben an sich bekannten und in der Praxis häufig verwendeten Hohlwanddosen oder Unterputzdosen, wie Geräteeinbaudosen angeordnet, wobei die aufzuwickelnde und zu verbindende Ader aus der Hohlwanddose oder Unterputzdose herausragt, um anschließend in die neben der Hohlwanddose oder Unterputzdose angeordnete Aufputzdose mit Aufnahmevorrichtung eingeführt und dort aufgewickelt und mit dem verbundenen Pigtail angeordnet wird.

Derartige Aufputzdosen sind ausschließlich für eine Aufputzmontage geeignet und ermöglichen keine Anordnung in im Stand der Technik vielfach bekannten und weit verbreiteten Hohlwanddosen oder Unterputzdosen oder Geräteeinbaudosen wie beispielsweise eine Hohlwand- oder Gebäudewand-Elektronikdose.

Insbesondere bei der Verwendung in privat genutzten Gebäuden wird diese häufig als optisch störend und sich nicht harmonisch ins Gesamtbild der Gebäudewandgestaltung eingepasste Lösung empfunden.

Aufgrund des eingangs genannten Standes der Technik liegt der vorliegenden Erfindung die Aufgabe zugrunde, eine Vorrichtung zur Aufnahme und lagesicheren Halterung von einer oder mehreren unterbrochenen oder freien oder mittels Verspleißen verbundenen Adern eines Lichtwellenleiters zu schaffen, die auch ein sicheres Aufnehmen oder Aufwickeln von besonders große Überlänge aufweisenden Adern, die beispielsweise die Angabe von zwei oder drei oder mehr Meter Überlänge ermöglicht, die dabei in eine an sich bekannte Hohlwand- oder Gebäudewand-Elektronikdose einführbar und dort platzierbar ist, sodass keinerlei optische Störung durch eine zusätzliche Dose zur Kontaktierung auf der Gebäudewand ersichtlich ist, die ferner dazu geeignet ist, entweder mittels Vercrimpen oder mittels Verschrumpfen oder mittels Vercrimpen und Verschrumpfen verspleißte Adern eines Lichtwellenleiters aufzunehmen und lagesicher zu haltern.

Zur Lösung dieser Aufgabe schlägt die Erfindung eine Vorrichtung mit den Merkmalen des Patentanspruches 1 vor.

Durch eine derartige erfindungsgemäße Vorrichtung ist es ermöglicht, die freien Enden einer Ader eines Lichtwellenleiters auf an sich bekannte Art und Weise mit einem Pigtail mittels Verspleißen zu verbinden. Die Verspleißung kann dabei mittels eines im Stand der Technik bekannten Crimp-Verfahrens oder eines auch im Stand der Technik bekannten Schrumpf-Verfahrens erfolgen. Die Überlänge der jeweiligen Ader des Lichtwellenleiters kann nach dem Verspleißen auf den Halter aufgewickelt werden, um sicherzustellen, dass die vorgegebenen Biegeradien eingehalten werden, um eine Beschädigung der Ader zu vermeiden. Der Bereich des Spleißes kann zusätzlich an dem Halter aufgenommen und befestigt werden, sodass auch dieser ohne Schaden zu nehmen am Halter angeordnet werden kann, um dort in der späteren Einbaulage zu verbleiben. Nach erfolgter Aufwicklung und Anordnung der Spleiße auf den Halter beziehungsweise am Halter, kann der Halter mit samt der Adern und der Spleiße in eine erfindungsgemäße topfartige Spleißkassette eingesetzt werden und mit samt dieser Spleißkassette in den Aufnahmebereich einer an sich bekannten Hohlwanddose oder Gebäudewand-Elektronikdose, die in der Regel unter dem Putz oder in einer Hohlwand angeordnet ist und somit optisch auf der Gebäudewandoberfläche nicht sichtbar ist, eingeführt werden, um dort platziert zu werden und dort zu verbleiben.

Der Aufnahmebereich bekannter und in der Praxis weit verbreiteter Hohlwand- oder Gebäudewand-Elektronikdosen ist dabei ausreichend groß dimensioniert, sodass auf einfache und schnelle Art und Weise die topfartige Spleißkassette mit samt des eingesetzten Halters in diese eingeführt werden kann. Dabei wird die topfartige Spleißkassette derart in die Gebäudewand-Elektronikdose eingeführt, dass der etwa kreisrunde Teil der Elektronikdose frei bleibt und für an sich bekannte Abdeckungen mit Steckverbindern zur Verbindung der Lichtwellenleiter verwendet werden kann.

Somit kann mittels einer erfindungsgemäßen Vorrichtung eine für den Betrachter der Gebäudewand unsichtbare und dabei sichere Lösung geschaffen werden, die es zudem ermöglicht, auch besonders große Überlänge aufweisende Adern eines Lichtwellenleiters sicher ohne diese zu beschädigen, aufzunehmen.

Insbesondere kann besonders bevorzugt vorgesehen sein, dass jeder Halter eine Grundplatte mit einer etwa ovalen oder etwa rechteckigen Grundform aufweist, an deren Außenrandkanten jeweils beidseitig gerichtete, etwa senkrecht abragende Stege angeordnet sind, die jeweils an ihrem freien Ende eine nach außen gerichtete erste Abwinklung aufweisen und gegebenenfalls eine nach innen gerichtete zweite Abwinklung aufweisen, wobei die Grundplatte Verlängerungen aufweist, die über die senkrecht abragenden Stege hinausragen und die parallel und zumindest in einem Teilbereich deckungsgleich zu den zweiten Abwinklungen angeordnet sind.

Eine derartige Form des Halters ermöglicht es beispielsweise, die Überlängen der Adern außen herum um die etwa senkrecht angeordneten Stege aufzuwickeln. Der Biegeradius der aufgewickelten Adern entspricht dabei einem zulässigen Biegeradius, sodass sichergestellt ist, dass durch das Aufwickeln keinerlei Beschädigung der Adern erfolgen kann. Zudem können an den nach innen gerichteten zweiten Abwinklungen die Spleiße angeordnet und befestigt werden, sodass auch die Spleiße sicher ohne Schaden zu nehmen, am Halter befestigt werden können, um dort in der Einbaulage zu verbleiben.

Weiter kann besonders bevorzugt vorgesehen sein, dass der Halter aus zwei identischen Halbschalen besteht, die miteinander verbindbar sind.

Dabei kann besonders bevorzugt vorgesehen sein, dass jede Halbschale an einer mit einer weiteren Halbschale zu verbindenden Seitenrandkante einen vorragenden Dorn und eine Lochung zur Aufnahme eines Dorns aufweist, wobei jeweils der Dorn einer ersten Halbschale in die Lochung einer zweiten Halbschale einführbar oder eingeführt ist um die Halbschalen lagegenau aneinander anzuordnen und miteinander zu verbinden.

Ein derartiger, aus zwei identischen Halbschalen bestehender Halter ermöglicht eine besonders kostengünstige Fertigung bei gleichzeitig einfachster Handhabung.

Zudem kann dabei besonders bevorzugt vorgesehen sein, dass jeder Dorn zumindest über einen Teil seiner Länge konisch ausgebildet ist und zum freien Ende hin eine Verjüngung als Einführhilfe aufweist.

Hierdurch ist ein besonders schnelles und einfaches Verbinden der beiden identischen Halbschalen zu einem aus zwei Halbschalen gebildeten Halter ermöglicht. Die lagerichtige Zuführung der Dorne in die jeweilige Lochung ist zudem durch die am freien Ende jedes Dorns ausgebildete Verjüngung erleichtert. Durch die Konizität des Dornes ist ein Verbleiben der zusammengeführten Halbschalen aneinander bereits durch die gebildeten Reibkräfte zwischen Dorn und Lochlaibung gegeben, sodass die derart zusammengeführten Teile zwar händisch voneinander trennbar sind, aber ansonsten aneinander verbleiben.

Darüber hinaus kann besonders bevorzugt vorgesehen sein, dass jeder Halter Mittel zur Aufnahme und Halterung sowohl von Schrumpfspleißen als auch von Crimpspleißen aufweist.

Insbesondere durch die entsprechende Ausgestaltung der in Richtung des Topfinneren gerichteten zweiten Abwinklungen können sowohl mittels Schrumpfspleißen als auch Mittels Crimpspleißen verbundene Adern am Halter angeordnet und lagesicher gehalten werden. Beispielsweise können um mittels eines Halters sowohl Schrumpfspleiße als auch Crimpspleiße aufzunehmen, die an einer ersten Grundseite der Grundplatte angeordneten zweiten Abwinklungen dazu geeignet sein, Schrumpfspleiße aufnehmen und zu haltern und die an der zweiten Grundseite der Grundplatte angeordneten zweiten Abwinklungen dazu geeignet sein, Crimpspleiße aufzunehmen und zu haltern. Somit hat der Monteur vor Ort mittels nur eines erfindungsgemäßen Halters beziehungsweise einer erfindungsgemäßen Vorrichtung zur Aufnahme und lagesicheren Halterung die Möglichkeit, sowohl Schrumpfspleiße als auch Crimpspleiße an der Vorrichtung zu verwenden. Die Spleiße unterscheiden sich je nach Art des Spleißes in den Abmessungen, sodass der Monteur vor Ort durch die erfindungsgemäße Vorrichtung nur eine äußerst geringe Anzahl von unterschiedlichen Teilen mit sich führen muss, da durch diese Vorrichtung die Aufnahme und Halterung sowohl von Schrumpfspleißen, als auch von Crimpspleißen ermöglicht ist.

Auch kann besonders bevorzugt vorgesehen sein, dass die topfartige Spleißkassette einen Aufnahmebereich aufweist, der etwa der Form des Halters entspricht und dabei geringfügig größer ist als der Halter, wobei an der topfartigen Spleißkassette Haltemittel angeordnet sind, die den Halter lagerichtig positionieren und gegebenenfalls in dieser Lage fixieren.

Hierdurch ist es beispielsweise sichergestellt, dass auf den Halter aufgewickelte Adern eines Lichtwellenleiters nicht aus der topfartigen Spleißkassette heraus vorragen und Schaden nehmen können.

In der in die topftartige Spleißkassette eingesetzten Lage des Halters sind die Abstände zwischen den ersten Abwinklungen und der Seitenwand der topfartigen Spleißkassette nur so gering dimensioniert, dass es jederzeit sichergestellt ist, dass die auf den Halter aufgewickelten Adern nicht aus dem Topfinneren der topfartigen Spleißkassette herausragen oder rutschen können, wodurch eine mögliche Beschädigung erfolgen könnte. Die freien Enden der ersten Abwinklungen können dabei äußerst nahe an den Wänden der topfartigen Spleißkassette oder diese kontaktierend angeordnet sein.

Zudem ist durch die angeordneten Haltemittel sichergestellt, dass der Halter lagerichtig innerhalb der topfartigen Spleißkassette angeordnet ist und zudem in dieser lagerichtigen Position fixiert ist.

Dabei kann insbesondere bevorzugt vorgesehen sein, dass die Haltemittel durch vom Boden der topfartigen Spleißkassette abragende senkrechte Stege oder einen doppel-T-förmigen Steg, gebildet sind, wobei der Steg den Halter durch am Halter ausgebildete Ausnehmungen durchgreift.

Insbesondere die Ausbildung eines derartigen doppel-T-förmigen Steges, der in etwa in der Bodenmitte zentral innerhalb der topfartigen Spleißkassette angeordnet ist und eine entsprechende Ausnehmung am Halter durchragt oder durchgreift, ist die lagegenaue Positionierung des Halters innerhalb der topfartigen Spleißkassette jederzeit sichergestellt.

Zudem kann besonders bevorzugt vorgesehen sein, dass die topfartige Spleißkassette an mindestens einer Seitenwand am freien Ende der Seitenwand ausgebildete Ausnehmungen aufweist.

Derartige Ausnehmungen ermöglichen eine Aderneinführung und auch eine Herausführung von Adern des Lichtwellenleiters aus der topfartigen Spleißkassette heraus beziehungsweise in diese hinein. Auch hierdurch wird eine mögliche Beschädigung der eingeführten oder herausgeführten Adern des Lichtwellenleiters weitestgehend vermieden, beziehungsweise ausgeschlossen.

Weiter kann besonders bevorzugt vorgesehen sein, dass die topfartige Spleißkassette an einer ihrer Außenseiten eine Handhabe und an der der Handhabe gegenüberliegenden Außenseite eine Einführschräge aufweist.

Eine derartige Handhabe, die durch einen Vorsprung oder dergleichen Verlängerung an der topfartigen Spleißkassette gebildet sein kann, ermöglicht insbesondere in Kombination mit einer an der gegenüberliegenden Außenseite angeordneten Einführschräge, ein besonders einfaches und lagerichtiges Positionieren der erfindungsgemäßen Vorrichtung in dem Aufnahmeraum beziehungsweise Aufnahmebereich einer Hohlwand- oder Gebäudewand-Elektronikdose. Hierdurch kann der Benutzer die Vorrichtung auf besonders einfache Art und Weise händisch ohne Zuhilfenahme von Spezialwerkzeug in den Aufnahmebereich der Elektronikdose einführen, sodass die Vorrichtung mit samt der aufgewickelten Adern und gegebenenfalls aufgenommenen und gehalterten Spleißen in dem Aufnahmeraum verbleiben kann.

Schließlich kann besonders bevorzugt vorgesehen sein, dass an den freien Seitenrandkanten der ersten Abwinklung jeweils ein Rastvorsprung ausgebildet ist, der in der Zusammenbaulage, in der der Halter in die topfartige Spleißkassette eingesetzt ist, in eine am Boden der topfartigen Spleißkassette ausgebildete Rastlochung eingreift und dort verrastet.

Durch die Ausbildung derartiger Rastvorsprünge am Halter, die in entsprechende Rastlochungen am Boden der topfartigen Spleißkassette in der Zusammenbaulage, in der der Halter in die topfartige Spleißkassette eingesetzt ist, eingreifen und dort verrasten, ist ein sicherer Verbleib des Halters innerhalb der topfartigen Spleißkassette ermöglicht. Durch die Verrastung ist ein selbständiges Lösen beziehungsweise Entfernen des Halters aus dem Aufnahmebereich der topfartigen Spleißkassette heraus verhindert.

Ein Ausführungsbeispiel der Erfindung ist in den Figuren dargestellt im Folgenden näher beschrieben.

Es zeigt:
- Figur 1: eine erfindungsgemäße Halbschale in perspektivischer Ansicht;
- Figur 2: desgleichen in Seitenansicht;
- Figur 3: zwei erfindungsgemäße Halbschalen in einer vorpositionierten Lage;
- Figur 4: einen erfindungsgemäßen Halter, bestehend aus zwei Halbschalen in der zusammengesetzten Lage;
- Figur 5: einen erfindungsgemäßen Halter in einer vor der Einführung in der Einführung in die topfartige Spleißkassette positionierter Lage;
- Figur 6: eine erfindungsgemäße Spleißkassette mit eingesetztem Halter;
- Figur 7: desgleichen mit Adern eines Lichtwellenleiters;

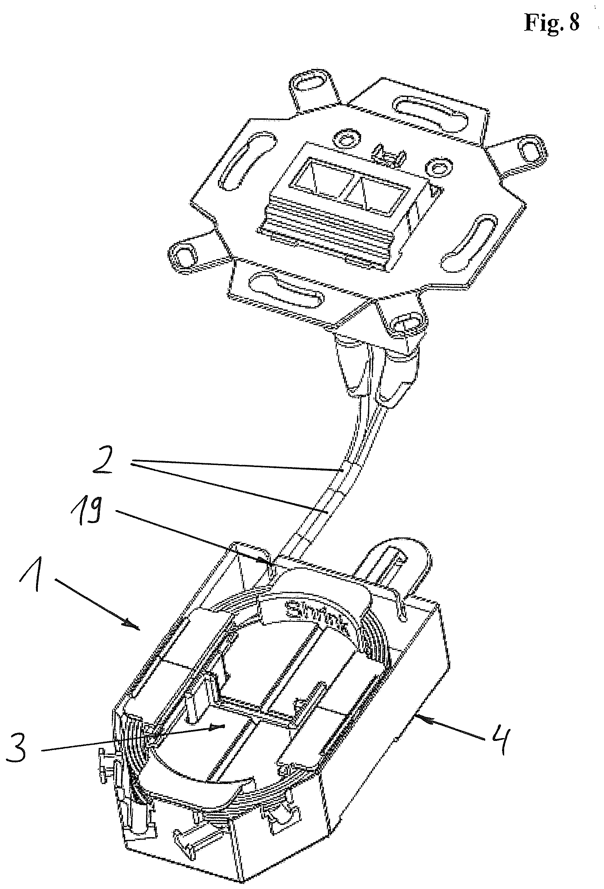

- Figur 8: einen verspleißten Lichtwellenleiter-Kontakteinsatz mit erfindungsgemäßer Vorrichtung;
- Figur 9: eine Hohlwand-Elektronikdose mit eingeführter topfartiger Spleißkassette mit samt des Halters und einer durch eine Zuführung zugeführten Ader eines Lichtwellenleiters.

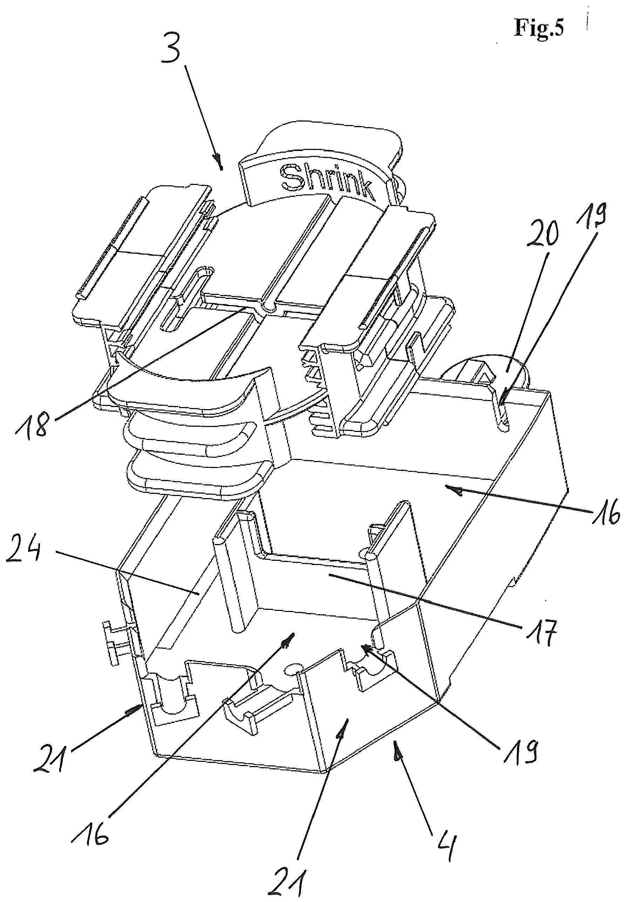

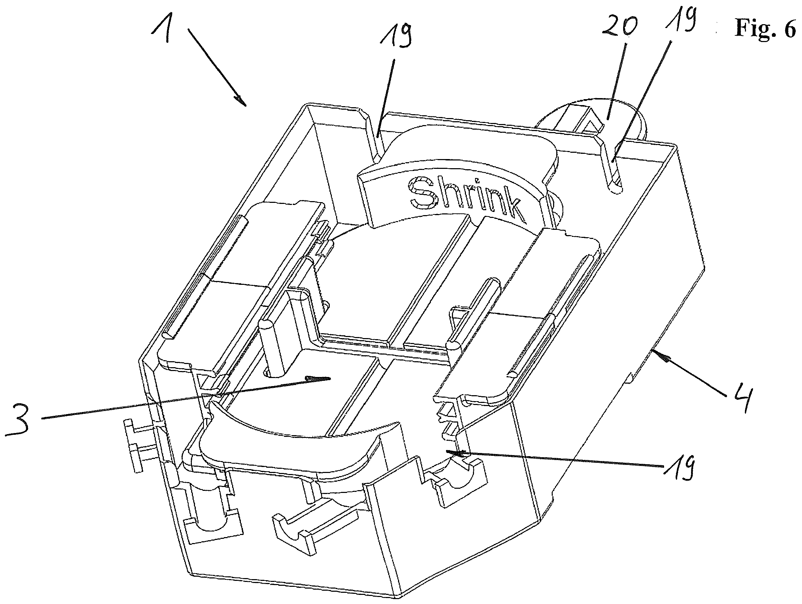

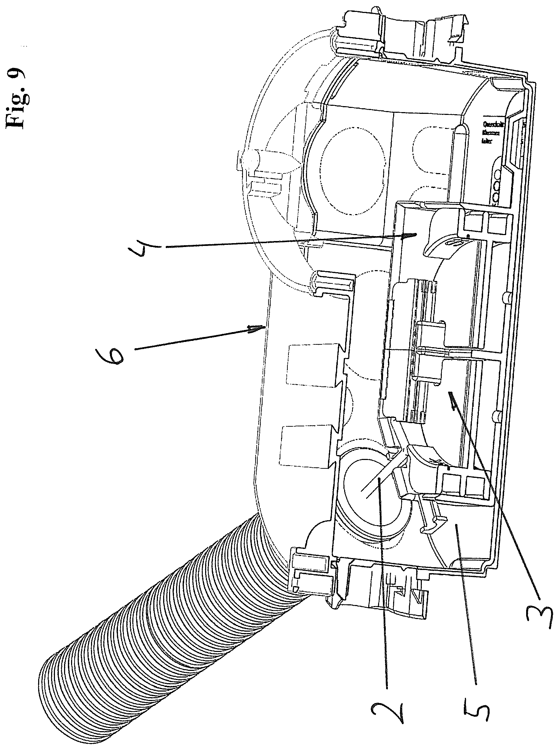

In den Figuren ist eine Vorrichtung zur Aufnahme und lagesicheren Halterung von einer oder mehreren ununterbrochenen oder freiendenden Adern 2 eines Lichtwellenleiters gezeigt. Dabei weist die Vorrichtung einen Halter 3 zur Aufnahme und Halterung einer oder mehrerer Adern 2 und/oder eines oder mehrerer Spleiße auf. Der Halter 3 ist mit samt der Adern 2 und gegebenenfalls der Spleiße in eine topfartige Spleißkassette 4, wie in Figur 5 angedeutet, einsetzbar beziehungsweise wie in den Figuren 6 und 7 und 9 gezeigt, eingesetzt und dort platziert. Eine derartige Vorrichtung dient dazu, die Überlängen der Adern 2 eines aus einer Gebäudewand herausragenden Lichtwellenleiters mit samt eines beispielsweise mit einem Pigtail verspleißten Kontaktteiles aufzunehmen und dabei sicherzustellen, dass die eine große Überlänge aufweisenden Adern 2 sicher und ohne Beschädigungen des für die Adern 2 vorgegebenen Radius auf den Halter 3 aufgewickelt und von weiteren Teilen der Vorrichtung 1 geschützt innerhalb einer Hohlwand- oder Gebäudewand-Elektronikdose 6, beziehungsweise insbesondere innerhalb des Aufnahmebereiches einer Hohlwand-Elektronikdose, angeordnet werden können.

In der Praxis werden die große Überlänge von beispielsweise zwei oder drei Metern aufweisenden Adern 2 aus einer Gebäudewand herausgeführt, um mit entsprechenden Pigtails verspleißt zu werden. Diese im Stand der Technik bekannten Pigtails bestehen aus Lichtwellenleiteraderstücken mit einem an einem Ende angeordneten Steckkontakt zur Verbindung mit entsprechenden Steckern. Das freie Aderende wird mittels Verspleißen mit dem aus der Gebäudewand herausragenden, eine Überlänge aufweisenden Lichtleiter beziehungsweise dessen Ader 2 verspleißt, um eine Datenübertragung zu ermöglichen.

In der Praxis sind dabei insbesondere zwei verschiedene Verfahren zum Verspleißen bekannt, die jeweils im Bereich ihrer Spleiße unterschiedliche Abmessungen oder Durchmesser aufweisen. Beim ersten weitverbreiteten Verfahren zum Verspleißen spricht man vom sogenannten "Schrumpf-Verfahren" und beim zweiten bekannten Verfahren vom sogenannten "Crimp-Verfahren".

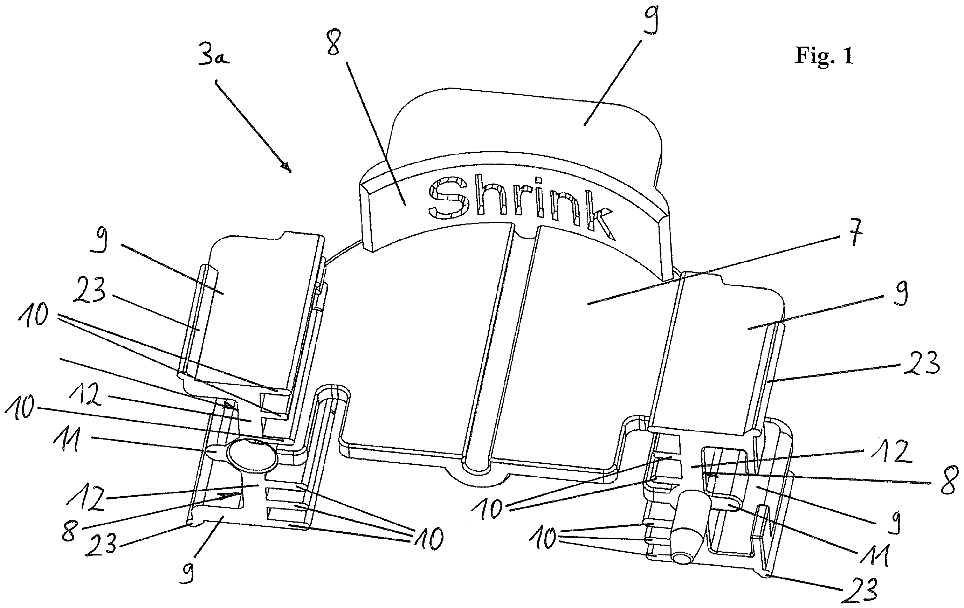

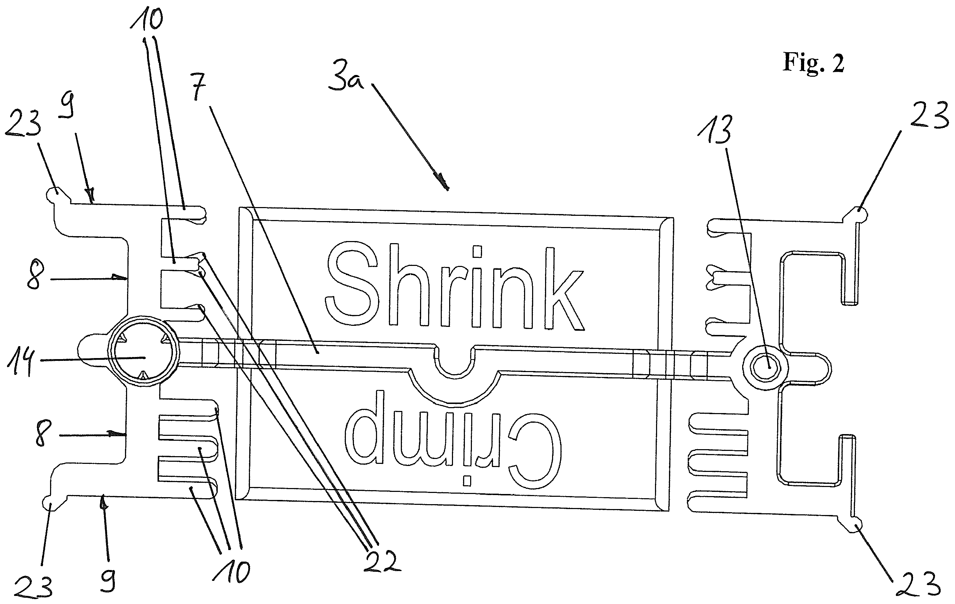

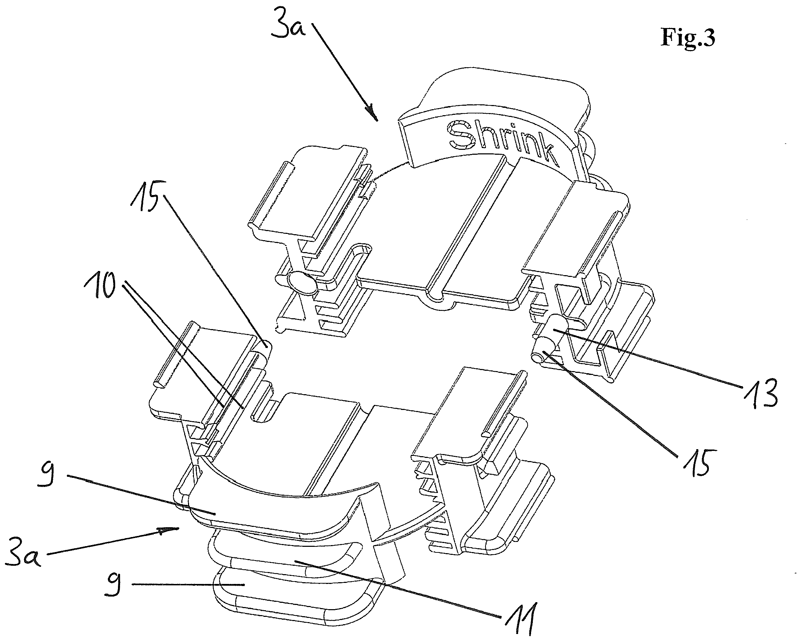

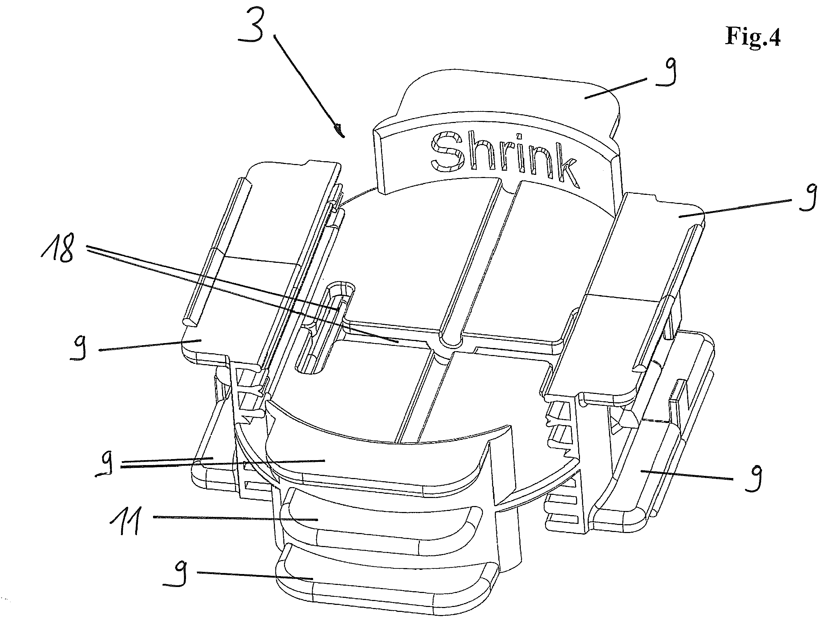

Wie insbesondere aus den Figuren 1 bis 4 ersichtlich, weist jeder Halter 3 eine Grundplatte 7 mit einer etwa ovalen Grundform auf. Alternativ und in den Figuren nicht gezeigt, kann die Grundform auch etwa rechteckig ausgebildet sein. An den Außenkanten der etwa ovalen Grundform der Grundplatte 7 sind jeweils beidseitig gerichtete, etwa senkrecht abragende Stege 8 angeordnet. Die Stege 8 weisen jeweils an ihrem freien Ende eine nach außen gerichtete erste Abwinklung 9 auf. Zudem weisen zumindest ein Teil der Stege 8 eine nach innen gerichtete zweite Abwinklung 10 auf. Dabei weist die Grundplatte 7 Verlängerungen 11 auf, die über die senkrecht abragenden Stege 8 hinausragen und die parallel oder zumindest in einem Teilbereich deckungsgleich zu oder zwischen den zweiten Abwinklungen 10 angeordnet sind.

Nach dem Verspleißen eines Pigtails mit dem freien Ende einer Ader 2 eines Lichtwellenleiters wird die Überlänge der Ader 2 außenseitig um den Halter 3 herum auf den Halter 3 aufgewickelt. Dabei ist die Ader 2 in mehreren Wicklungen zwischen den ersten Abwinklungen 9 und den Verlängerungen 11, gegebenenfalls an den senkrecht abragenden Stegen 8 anliegend, angeordnet. Die Spleiße sind zwischen zwei benachbarten, nach innen gerichteten zweiten Abwinklungen 10 angeordnet und von den Abwinklungen 10 klemmend gehaltert.

Somit kann die eine große Überlänge von beispielsweise 2 oder 3 Metern aufweisende Ader 2 des Lichtwellenleiters mit samt des Spleißes vor Beschädigungen geschützt auf dem erfindungsgemäßen Halter 3 zunächst außenseitig aufgewickelt werden, wobei der Bereich des Spleißes etwa innenseitig zwischen den zweiten Abwinklungen 10 angeordnet und dort befestigt ist. Eine derartig angeordnete Ader 2 eines Lichtwellenleiters ist nach dem Einsetzen des Halters 3 mit samt der Ader 2 oder Adern 2 und des Spleißes oder der Spleiße in die topfartige Spleißkassette 4 weitestgehend vor Beschädigungen beispielsweise durch Knicken oder Einklemmen einer Ader 2 geschützt. Somit ist ein uneingeschränkter Datenfluss durch diese Ader 2 jederzeit sichergestellt.

Wie insbesondere aus den Figuren 1 bis 3 ersichtlich, besteht jeder Halter 3 aus zwei identischen Halbschalen 3a, die auf schnelle und einfache Art und Weise miteinander zu einem Halter 3 verbindbar sind. Jede Halbschale 3a weist an einer mit einer weiteren Halbschale 3a zu verbindenden Seitenrandkante 12 einen vorragenden Dorn 13 und eine Lochung 14 zur Aufnahme eines Dorns 13 auf. Dabei ist jeweils der Dorn 13 einer ersten Halbschale 3a in die Lochung 14 einer zweiten Halbschale 3a zur Verbindung einführbar beziehungsweise eingeführt. Durch die Einführung der Dorne 13 in die Lochung 14 des jeweils anderen Teils ist eine lagegenaue Verbindung der beiden Halbschalen 3a zu einem Halter 3 auf schnelle und einfache Art und Weise ermöglicht. Jeder Dorn 13 weist dabei zumindest einen über einen Teil seiner Länge konisch ausgebildeten Bereich auf und ist zusätzlich zu seinem freien Ende hin mit einer Verjüngung 15 versehen, die eine Einführhilfe bildet, wodurch zusätzlich die Verbindung zweier Halbschalen 3a zu einem Halter 3 erleichtert ist.

Durch die Konizität im Bereich eines Teils der Länge jedes Dorns 13 ist durch die Berührung mit der Innenlaibung der Lochung 14 bereits durch Reibschluss ein Verbleiben der miteinander verbundenen Halbschalen 3a als Halter 3 sichergestellt.

Jeder Halter 3 weist im Ausführungsbeispiel sowohl Mittel zur Aufnahme und Halterung von Schrumpfspleißen, als auch Mittel zur Aufnahme und Halterung von Crimpspleißen auf. Alternativ und in den Figuren nicht gezeigt, kann jeder Halter 3 auch lediglich Mittel zur Aufnahme und Halterung von entweder Schrumpfspleißen oder zur Aufnahme und Halterung von Crimpspleißen aufweisen.

Dadurch, dass der in den Figuren gezeigte Halter 3 sowohl Schrumpfspleiße als auch Crimpspleiße aufnehmen und geschützt haltern kann, ist es für den Monteur vor Ort ermöglicht, eine nur geringe Anzahl von Teilen mit sich zu führen.

Die nach innen gerichteten zweiten Abwinklungen 10 an den etwa senkrecht abragenden Stegen 8 sind dabei so ausgebildet, dass zwischen zwei benachbarten nach innen gerichteten Abwinklungen 10 entweder ein Schrumpfspleiß oder ein Crimpspleiß aufgenommen und in der aufgenommenen Lage gehaltert werden kann.

Hierzu können die nach innen gerichteten Abwinklungen 10 auch entsprechende Länge oder gegebenenfalls an ihren freien Endbereichen Haltevorsprünge oder Klemmvorsprünge 22 aufweisen.

Wie insbesondere aus den Figuren 5 bis 7 ersichtlich, weist die topfartige Spleißkassette 4 einen Aufnahmebereich 16 auf, der etwa der Form des Halters 3 entspricht und dabei lediglich geringfügig größer ist als der Halter 3. Zudem sind an der topfartigen Spleißkassette 4 Haltemittel angeordnet, die den Halter 3 lagerichtig positionieren und gegebenenfalls in dieser Lage fixieren.

Wie insbesondere aus Figur 5 ersichtlich, ist das Haltemittel durch einen senkrecht vom Boden der topfartigen Spleißkassette 4 abragenden, etwa doppel-T-förmigen Steg 17 gebildet, der den Halter 3 durch am Halter 3 ausgebildete Ausnehmungen 18 durchgreift, um diesen lagegenau zu positionieren und gegebenenfalls zu fixieren. In der in die topfartige Spleißkassette 4 eingesetzten Lage des Halters 3 kontaktieren die ersten Abwinklungen 9 und gegebenenfalls die Verlängerungen 11 die Seitenwand des Aufnahmebereiches 16 der topfartigen Spleißkassette 4. Hierdurch ist es sichergestellt, dass die aufgewickelten Adern 2 eines Lichtwellenleiters auch nach dem Einsetzen des Halters 3 in den Aufnahmebereich 16 der topfartigen Spleißkassette 4 in dieser Lage verbleiben, und nicht aus dem Aufnahmebereich 16 herausragen können und dort gegebenenfalls Schaden nehmen könnten.

Die topfartige Spleißkassette 4 weist an mindestens einer Seitenwand am freien Ende der Seitenwand ausgebildete Ausnehmungen 19 auf, durch die eine oder mehrere Adern 2 eines Lichtwellenleiters in die den Aufnahmebereich 16 der topfartigen Spleißkassette 4 hineingeführt oder aus diesem herausgeführt werden können, ohne dass eine Verklemmung oder Beschädigung oder dergleichen Beeinträchtigung der Ader 2 erfolgt.

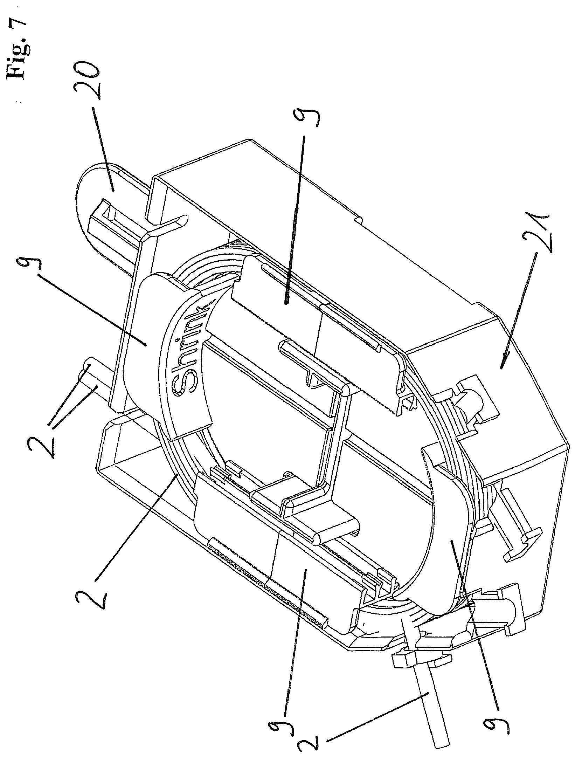

Wie insbesondere aus Figur 7 ersichtlich, kann die topfartige Spleißkassette 4 an einer Außenseite eine Handhabe 20 aufweisen und an der der Handhabe 20 gegenüberliegenden Außenseite eine Einführschräge 21 aufweisen. Mittels dieser Handhabe 20 kann ein Benutzer die Vorrichtung 1 mit nur einer Hand greifen und in den Aufnahmebereich 5 der Gebäudewand- oder Hohlwand-Elektronikdose 6 einführen und dort an gewünschter Stelle platzieren. Durch die auf der der Handhabe 20 gegenüberliegenden Außenseite ausgebildeten Einfuhrschräge 21 ist das Einschieben ohne Verkanten oder dergleichen Hindernisse auf besonders schnelle und einfache Art und Weise in den Aufnahmebereich 5 ermöglicht.

Ein ungewünschtes Lösen oder Entfernen des Halters 3 aus der topfartigen Spleißkassette 4 heraus ist zudem durch an der ersten Abwinklung 9 jedes Halters 3 ausgebildete Rastvorsprünge 23, die in der Zusammenbaulage, in der der Halter 3 in die topfartige Spleißkassette 4 eingesetzt ist, in eine am Boden der topfartigen Spleißkassette 4 ausgebildete Rastlochung 24 eingreifen und dort verrasten, wirksam verhindert.

Die Erfindung ist nicht auf das Ausführungsbeispiel beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichen:

- 1: Vorrichtung
- 2: Ader
- 3: Halter
- 3a: Halbschale von 3
- 4: Topfartige Spleißkassette
- 5: Aufnahmebereich von 6
- 6: Gebäudewand-Elektronikdose
- 7: Grundplatte von 3
- 8: Stege an 7
- 9: erste Abwinklung an 8
- 10: zweite Abwinklung an 8
- 11: Verlängerung an 7
- 12: Seitenrandkante von 3a
- 13: Dorn an 3a
- 14: Lochung an 3a
- 15: Verjüngung an 13
- 16: Aufnahmebereich an 4
- 17: Doppel-T-förmige Steg an 4
- 18: Ausnehmung an 3
- 19: Ausnehmung an 4
- 20: Handhabe an 4
- 21: Einführschräge
- 22: Klemmvorsprünge
- 23: Rastvorsprung an 9
- 24: Rastlochung an 4

## Patentansprüche

1. Vorrichtung (1) zur Aufnahme und lagesicheren Halterung von einer oder mehreren ununterbrochenen oder freien oder mittels Verspleißen verbundenen Adern (2) eines Lichtwellenleiters, aufweisend einen Halter (3) zur Aufnahme und Halterung einer oder mehrerer Adern (2) und/oder eines oder mehrerer Spleiße, wobei der Halter (3) mitsamt der Adern (2) und der Spleiße in eine topfartige Spleißkassette (4) einsetzbar oder eingesetzt ist, wobei ferner die topfartige Spleißkassette (4) mitsamt des Halters (3) und der Adern (2) und der Spleiße in den Aufnahmebereich (5) einer Gebäudewand-Elektronikdose (6) einführbar oder eingeführt und dort platzierbar oder platziert ist.

2. Vorrichtung (1) nach Anspruch 1, **dadurch gekennzeichnet, dass** jeder Halter (3) eine Grundplatte (7) mit einer etwa ovalen oder etwa rechteckigen Grundform aufweist, an deren Außenrandkanten jeweils beidseitig gerichtete, etwa senkrecht abragende Stege (8) angeordnet sind, die jeweils an ihrem freien Ende eine nach außen gerichtete erste Abwinklung (9) aufweisen und gegebenenfalls eine nach innen gerichtete zweite Abwinklung (10) aufweisen, wobei die Grundplatte (7) Verlängerungen (11) aufweist, die über die senkrecht abragenden Stege (8) hinausragen und die parallel und zumindest in einem Teilbereich deckungsgleich zu den zweiten Abwinklungen (10) angeordnet sind.

3. Vorrichtung (1) nach Anspruch 1 oder 2, **dadurch gekennzeichnet, dass** der Halter (3) aus zwei identischen Halbschalen (3a) besteht, die miteinander verbindbar sind.

4. Vorrichtung (1) nach Anspruch 3, **dadurch gekennzeichnet, dass** jede Halbschale (3a) an einer mit einer weiteren Halbschale (3a) zu verbindenden Seitenrandkante (12) einen vorragenden Dorn (13) und eine Lochung (14) zur Aufnahme eines Dorns (13) aufweist, wobei jeweils der Dorn (13) einer ersten Halbschale (3a) in die Lochung (14) einer zweiten Halbschale (3a) einführbar oder eingeführt ist um die Halbschalen (3a) lagegenau aneinander anzuordnen und miteinander zu verbinden.

5. Vorrichtung (1) nach Anspruch 3 oder 4, **dadurch gekennzeichnet, dass** jeder Dorn (13) zumindest über einen Teil seiner Länge konisch ausgebildet ist und zum freien Ende hin eine Verjüngung (15) als Einführhilfe aufweist.

6. Vorrichtung (1) nach einem der Ansprüche 1 bis 5, **dadurch gekennzeichnet, dass** jeder Halter (3) Mittel zur Aufnahme und Halterung sowohl von Schrumpfspleißen als auch von Crimpspleißen aufweist.

7. Vorrichtung (1) nach einem der Ansprüche 1 bis 6, **dadurch gekennzeichnet, dass** die topfartige Spleißkassette (4) einen Aufnahmebereich (16) aufweist, der etwa der Form des Halters (3) entspricht und dabei geringfügig größer ist als der Halter (3), wobei an der topfartigen Spleißkassette (4) Haltemittel angeordnet sind, die den Halter (3) lagerichtig positionieren und gegebenenfalls in dieser Lage fixieren.

8. Vorrichtung (1) nach Anspruch 7, **dadurch gekennzeichnet, dass** die Haltemittel durch vom Boden der topfartigen Spleißkassette (4) abragende senkrechte Stege oder einen doppel-T-förmigen Steg (17), gebildet sind, wobei der Steg den Halter (3) durch am Halter (3) ausgebildete Ausnehmungen (18) durchgreift.

9. Vorrichtung (1) nach einem der Ansprüche 1 bis 8, **dadurch gekennzeichnet, dass** die topfartige Spleißkassette (4) an mindestens einer Seitenwand am freien Ende der Seitenwand ausgebildete Ausnehmungen (19) aufweist.

10. Vorrichtung (1) nach einem der Ansprüche 1 bis 9, **dadurch gekennzeichnet, dass** die topfartige Spleißkassette (4) an einer ihrer Außenseiten eine Handhabe (20) und an der der Handhabe (20) gegenüberliegenden Außenseite eine Einführschräge (21) aufweist.

11. Vorrichtung (1) nach einem der Ansprüche 2 bis 10, **dadurch gekennzeichnet, dass** an den freien Seitenrandkanten der ersten Abwinklung (9) jeweils ein Rastvorsprung (23) ausgebildet ist, der in der Zusammenbaulage, in der der Halter (3) in die topfartige Spleißkassette (4) eingesetzt ist, in eine am Boden der topfartigen Spleißkassette (4) ausgebildete Rastlochung (24) eingreift und dort verrastet.
